(19) Europäisches Patentamt
European Patent Office
Office européen des brevets

(11) **EP 2 910 923 A1**

(12) **EUROPEAN PATENT APPLICATION**

(43) Date of publication:
**26.08.2015  Bulletin 2015/35**

(51) Int Cl.:
***G01N 11/14*** *(2006.01)*

(21) Application number: **14382060.3**

(22) Date of filing: **24.02.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Fundacion Tekniker
20600 Eibar (Guipuzkoa) (ES)**

(72) Inventors:
• **Conte, Marcello
20600 Eibar (Guipuzkoa) (ES)**
• **Pinedo Araukua, M Bihotz
20600 Eibar (Guipuzkoa) (ES)**

(74) Representative: **Stiebe, Lars Magnus et al
Balder
Paseo de la Castellana 93
28046 Madrid (ES)**

(54) **Device and method for measuring the drag force between a liquid and a surface**

(57)     Device and method for measuring the drag force exerted by a liquid on a surface. The device comprises an inner element (26, 36, 56), a sensor (22, 32, 52), a tank (25, 35, 55) and an actuator (21, 31, 55). The tank (25, 35, 55) is configured to receive therein the inner element (26, 36, 56) and to fill at least part of the volume not occupied by the inner element (26, 36, 56) with a liquid (28, 38, 58) whose drag force relative to a surface is required to be measured. Either the sensor (22, 32) is connected to a surface of the inner element (26, 36) and the actuator (21, 31) is connected to the tank (25, 35), or the sensor (52) is connected to a surface of the tank (55) and the actuator (51) is connected to the inner element (56). The element (25, 35, 56) which is connected to the actuator (21, 31, 51) rotates actuated by the actuator (21, 31, 51) while the other element (26, 36, 55) remains static. The drag force experienced on the surface of the element (26, 36, 55) to which the sensor is connected, as a consequence of the movement sustained by the liquid (28, 38, 58) which in turn is a consequence of the rotation applied by the actuator (21, 31, 51) is measured.

FIG. 2

**Description**

**TECHNICAL FIELD**

The present invention relates to the field of measuring systems and, more specifically, systems and methods for measuring the drag force exerted by a liquid on a surface.

**BACKGROUND OF THE INVENTION**

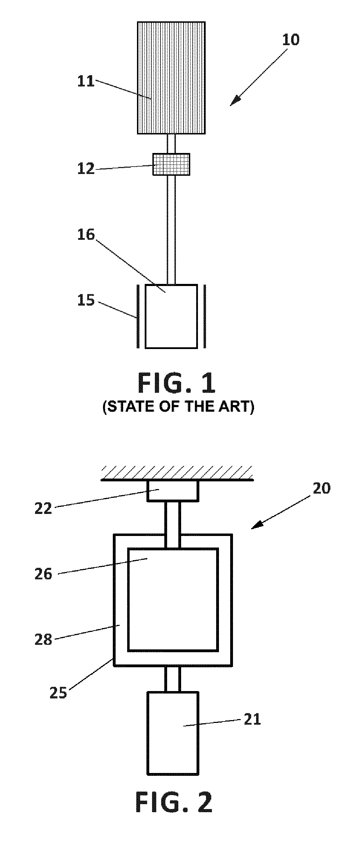

Currently, the drag force or resistance that a liquid exerts on a surface is measured using a similar configuration to the one used in commercial viscometers. One outline of this conventional configuration is shown in Figure 1, where it is possible to observe a motor 11, a torque meter or sensor 12 and a test cylinder 16, all of which are placed in series (on the same axis). The test cylinder 16 is inserted into a second cylinder 15. To measure the drag force, the second (outer) cylinder 15 is filled with a liquid and the test cylinder 16 is rotated by actuating the motor 11. The torque meter 12 records the relative drag force between the liquid and the surface of the test cylinder 16. This configuration for measuring drag force is described for example by Tohiro Otsuki et al., in "Development of drag reducing antifouling paint and experimental investigation on mass transfer phenomenon near the painted wall", S.Z. Kiil et al., in "Marine biofouling protection: design of controlled release antofouling paints" and Claus E Weinell, Kenneth N Olsen, Martin W Christoffersen & Soren Kiil (2003), in "Experimental Study of Drag Resistance Using a Laboratory Scale Rotary Setup", Biofouling, 19:S1, 45-51.

This configuration causes problems with the accuracy of the measurement, mainly due to the fact that the motor and torque meter are situated on the same shaft, in other words, are not independent from each other. This causes, for example, the vibrations and noise of the motor to affect the measurement of the drag force, given that the vibrations will also be transmitted to the inner cylinder. All in all, the main drawbacks of this configuration are the vibrations caused by the motor and the dynamic effects that occur due to the rotation of the shaft itself.

**DESCRIPTION OF THE INVENTION**

The present invention seeks to resolve the aforementioned drawbacks, by providing a device for measuring the relative drag force between a liquid and a surface, which eliminates the influence of dynamic effects on the measurement.

In a first aspect of the invention, a device for measuring the relative drag force between a liquid and a surface is provided, which comprises an inner element, a sensor, a tank and an actuator. The tank is configured to receive the inner element therein and to fill at least part of the volume not occupied by the inner element with a liquid whose drag force relative to a surface is required to be measured. Either the sensor is connected to a surface of the inner element and the actuator is connected to the tank, or the sensor is connected to a surface of the tank and the actuator is connected to the inner element. The measuring device is configured so that the element connected to the actuator rotates actuated by the actuator while the other element remains static, with the sensor being configured to measure the drag force experienced on the surface of the element to which it is connected, which is in contact with the liquid in motion, as a consequence of the movement sustained by the liquid which in turn is the result of the rotation applied by the actuator.

In a possible embodiment, the sensor is connected to a surface of the inner element and the actuator is connected to the tank, with the tank being the element that is configured to rotate actuated by the actuator while the inner element remains static.

In another possible embodiment, the sensor is connected to the tank and the actuator is connected to the inner element, with the inner element being the element that is configured to rotate actuated by the actuator while the tank remains static. In this case, the sensor is preferably connected to an outer surface of the tank.

Preferably, either the tank or the inner element is fitted with a temperature sensor.

Preferably, the tank is cylindrical.

Preferably, the inner element is cylindrical.

In a possible embodiment, the element that is connected to the sensor is coated or lined with a coating or lining, or has a surface treatment applied to it, with the device being configured to measure the drag force exerted by the liquid on said coating, lining or treatment. This coating, lining or treatment may be, among others, a layer of paint or a fabric.

In a possible embodiment, the surface of the element that is connected to the actuator, which is in contact with the liquid, comprises a plurality of mixing elements to favour turbulence, mixing or stirring of the liquid.

The device is configured so that, in use, the flow of the liquid inside the tank is laminar or turbulent.

In another aspect of the present invention, a method is provided for measuring the relative drag force between a liquid and a surface. The method comprises the stages of: introducing an inner element inside a tank, wherein either a surface of the inner element is connected to a sensor and the tank is connected to an actuator, or a surface of the tank is connected to a sensor and the inner element is connected to an actuator; filling the volume of the tank not occupied by the inner element with a liquid whose drag force is required to be measured; actuating the actuator, making the element that is connected to the actuator rotate, while the other element remains static; measuring through the sensor the relative drag force between the liquid and the surface of the element to which the sensor that is in contact with the liquid is connected, said force occurring as a consequence of the movement sustained by the liquid which in turn is a consequence of the rotation applied by the actuator.

The benefits of the invention will become apparent in the light of the description that follows.

**BRIEF DESCRIPTION OF THE DRAWINGS**

As a complement to the description, and to help to understand the characteristics of the invention, in accordance with an example of a practical embodiment thereof, various drawings are attached as an integral part of the description, which by way of illustration and not limitation, represent the following:

Figure 1 is an outline of a conventional meter of the relative drag force between a liquid and a surface.
Figure 2 shows an outline of the measuring device of the invention.
Figure 3 shows a cross-section of an example of implementation of the measuring device of the invention. The cross-section illustrates the test element once introduced into the rotatory tank.
Figure 4 shows a graph with measurement of the friction torque (N x m) and speed ramp (rpm). The friction torque has been recorded by the measuring device of the example, based on time (s) and the motor's transmission speed (rpm). The drag force is extrapolated with simple engineering calculations knowing the radius of the test cylinder.
Figure 5 shows an outline of an alternative measuring device according to the invention.

**DESCRIPTION OF A MODE OF EMBODIMENT OF THE INVENTION**

The device of the invention allows the friction torque between a liquid and a surface to be measured. Non-limiting examples of liquid whose drag force exerted on a surface can be measured using the device described herein include: water, oil, or any other product, element or compound, in liquid state, with or without additives of any type (solvents, abrasives, etc.). Likewise, the measurement surface in contact with the liquid may or may not be lined. In other words, the device described herein also serves to carry out friction measurements on surfaces such as: coatings, for example, paints applied to a surface (for example, boat hull paint) and linings, for example, a fabric.

In the device or cell for measuring the drag force exerted by a liquid, the actuation system is separate from the measurement system. In other words, the element to be tested, coupled to the measurement system, remains static while the other element (which is rotatory) is acted on by means of an actuator (this rotatory element and the actuator among other elements, make up the actuation system). The measurement of the resulting friction on the entire surface of the measuring element covered completely or partially by the liquid is carried out by means of a sensor or transducer.

Figure 2 shows an outline of a possible embodiment of the measuring device 20 of the invention. A test element 26 is introduced into a tank or hollow container 25. In general, this element is referred to as the "inner element" 26 as it is introduced into the tank 25. The tank 25 can be made of any material. The inner element 26 may be hollow or solid and may be made of any material, and may also be coated. The inner element 26 may have any shape. In general, the more the inner element 26 weighs, the more stable it will be, therefore the measurements taken will be more accurate. However, the main limitation or condition that can be imposed on the material the inner element 26 is made of is imposed by the transducer or sensor to be used (for example, it may be that a transducer does not have sufficient axial resistance to withstand a determined weight). In a possible embodiment, the inner element 26 on which the tests will be carried out, may have a surface treatment or coating or lining applied to it to protect the surface. This coating, lining or treatment may be apaint or a fabric.

In these cases, the effect of the drag force exerted by a liquid on the paint or fabric (or in general, treatment or coating) is analysed and measured, or the force of interaction between the liquid and the surface of the test element.

The volume of the tank or container 25 not occupied by the inner element 26 is filled totally or partially with a liquid whose drag force relative to the surface of the inner element 26 is required to be measured. In a possible embodiment, the liquid may be water, for example, seawater. Given that the equipment is for measuring drag force, the measurements for determining the relative drag force between the liquid and the surface of the inner element 26, in contact with that liquid, can be carried out irrespective of whether the regime of the liquid is laminar or turbulent. Theoretically, and as a person skilled in the art is aware, the estimation of the type of flow can be carried out by means of calculating the Reynolds number. Whereas in the case of laminar flow, there are formulae that are fairly close to reality, in turbulent flow the formulae have a higher margin of error. In general, however, this last regime is more representative of reality. For example, in the case of requiring the relative drag force between seawater and the hull of a boat to be studied, the turbulent regime more faithfully represents the force that the sea exerts on the hull.

Experimentally, the type of liquid regime will depend on the combination of several parameters, such as, the dimensions of the inner element 26, and the tank 25, as well as the test conditions (speed of rotation, liquid properties, etc.).

In a particular embodiment, an inner element 26 is designed with a cylindrical shape and the tank 25 also with a c

ylindrical shape, with a slightly larger diameter than the diameter of the inner cylinder 26. In this way, between the tank 25 and the inner cylinder 26 there is a small gap or small space for liquid (28 in figure 2).

An actuator 21 is connected or coupled to the tank 25 and, in use, makes the tank 25 rotate. In other words, when the actuator 21 rotates the tank 25 rotates. When the tank 25 rotates, the liquid inside moves or rotates around the inner element 26, which remains substantially fixed or static. The actuator 21 transmits a movement to the liquid of the tank 25. This liquid, in moving, drags or causes friction against the surface of the inner element 26, which is in contact with the liquid. From the point of view of existing forces, the actuator 21 gives a torque that is transmitted to the liquid, which in turn is transmitted to the inner element 26, and which can be measured, as explained below. A sensor, meter or transducer 22 coupled or connected to the inner element 26, which because it is coupled to the sensor acts as the test element measures directly or indirectly the friction between the liquid and the surface of the inner element 26 in contact with that liquid. It must be noted that the sensor or transducer 22 is totally independent of the actuator 21. In other words, the sensor 22 and the actuator 21 are totally uncoupled, unlike what occurs in conventional drag force measuring devices, as described under the background heading. When the device is in use, the actuator 21 makes the tank 25 rotate while the inner element 26 remains substantially static.

The meter, sensor or transducer 22 measures the force that the inner element 26 receives due to the force of the liquid. This meter 22 can measure said drag force directly or indirectly. To carry out direct measurements, the sensor or transducer 22 is a torque meter, which measures the force of rotation directly. To carry out indirect measurements, any sensor or transducer can be used, for example connected or coupled to one end of a lever, whose opposite end is connected to the inner element 26. Non-limiting examples of sensors that can be used in this case are optical meters based, for example, on optical fibres, electric meters, visual cameras or gauges, among others. The sensor or transducer 22 can be connected to the inner element 26 through a shaft or directly to the surface of the element 26 (for example if the sensor is waterproof).

In a preferred embodiment, the sensor or transducer 22 is connected to the inner element (test element) 26 in such a way that they are both aligned on a substantially vertical axis, leaving the sensor or transducer 22 above the inner element 26. In other words, the inner element 26 is connected to a support (upper part of figure 2) through the transducer 22. This is the implementation outlined in figure 2.

The actuator or actuation system 21 may be, for example, a motor or a rack and pinion system, among others. In figure 2 it is represented connected to the base of the tank 25, but it can be situated in any other position, for example laterally shifted.

In a possible embodiment, the inner surface of the tank 25 comprises projections or mixing elements, in the form of blades or fins to favour turbulence, mixing or stirring of the liquid.

In a preferred embodiment, the tank or container 25 incorporates or has embedded a temperature sensor, not illustrated, to measure the temperature of the liquid (for example, water) after the test in order to determine the drag force. This way the influence of temperature on the measurement is controlled.

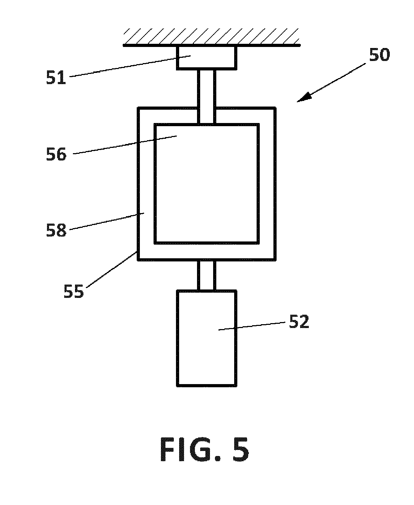

Figure 5 shows an outline of an alternative embodiment of the measuring device 50 of the invention. As in the previous case, an element, referred to as the "inner element" 56, is introduced inside a tank or hollow container 55. However, in this embodiment, the inner element does not function as part of the measuring system, but as part of the actuation system. Similarly, the tank will not form part of the actuation system; instead it will form part of the measuring system. As the in previous embodiment, the tank 55 and the inner element 56 can be made of any material. The inner element 56 may be hollow or solid and can have any shape. The tank 55 - which in this embodiment is the test element - can also be coated with any type of surface treatment, coating, or lining to protect the surface, such as a paint or a fabric.

The volume of the tank or container 55 not occupied by the inner element 56 is filled totally or partially with a liquid whose drag force relative to the surface of the tank is required to be measured. The explanations and possibilities related to the type of liquid and conditions and regime thereof, which have been given in relation to the implementation of figure 2, apply, mutatis mutandis, to this implementation.

In a particular embodiment, the inner element 56 is designed with a cylindrical shape and the tank 55 also with a cylindrical shape, with a slightly larger diameter than the diameter of the inner cylinder 56. In this way, between the tank 55 and the inner cylinder 56 there is a small gap or small space for liquid (58 in figure 5).

An actuator 51 is connected or coupled to the inner element 56 and, in use, makes the inner element 56 rotate. Note that in this embodiment, it is the inner element 56 that rotates, unlike in the previous implementation, wherein it remained static. When the actuator 51 rotates, the inner element 56 rotates, and as the latter rotates the liquid 58 moves or rotates inside the tank 55, which remains substantially fixed or static. Everything explained in relation to the actuator 21 of figure 2 applies, mutatis mutandis, to the actuator 51 of this implementation. Preferably, the actuator or actuation system 51 is connected to the inner element 56 in such a way that both are aligned on a substantially vertical axis, leaving the actuator 51 above the inner element 56, as outlined in figure 5.

The liquid 58, on moving, drags or causes friction against the surface of the tank 55, which is in contact with the liquid. A sensor, meter or transducer 52 coupled or connected to the tank 55, which in this case acts as the test element, measures directly or indirectly the friction between the liquid and the inner surface of the tank 55 in contact with that liquid 58. As in the previous embodiment, the sensor or transducer 52 is totally independent of the actuator 51. The sensor 52 is connected directly or indirectly to the outer surface of the tank 55. Everything else explained in relation to the sensor 22 of figure 2 applies, mutatis mutandis, to the sensor 52 of this implementation.

In a preferred embodiment, the sensor or transducer 52 is connected to the tank (test element) 55 in such a way that they are both aligned on a substantially vertical axis, leaving the sensor or transducer 52 below the tank 55, as outlined in figure 5. Alternatively, the sensor 52 can be situated on a side of the tank 55.

In a possible embodiment, the surface of the inner element 56 which is in contact with the liquid 58, comprises several projections or mixing elements, in the form of blades or fins, to favour turbulence, mixing or stirring of the liquid.

The tank 55 or inner element 56 can have incorporated or embedded a temperature sensor, not illustrated, in order to measure the temperature of the liquid (for example, water) after the test to determine the drag force. This way the influence of temperature on the measurement is controlled.

## EXAMPLE OF IMPLEMENTATION

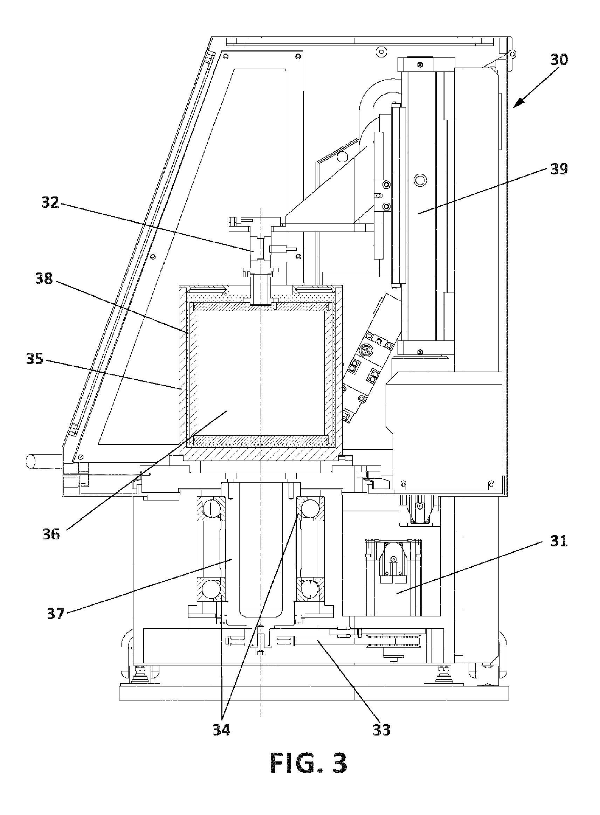

What follows is a description of an example of real implementation of the measuring device 30 of the invention. The measuring device of the example has been designed and implemented in accordance with the model of figure 2. The system of the example allows the drag force or resistance of surfaces in contact with liquids in the turbulent regime (defined by the Reynolds number Re>64) to be measured. Specifically, the measuring device 30 has been designed and implemented to measure the drag force of mollusc-resistant paints for boats. The device of the example is illustrated in figure 3, which shows a cross-section of the measuring device 30. The cross-section has been taken in a situation wherein the static test element 36 has already been introduced into the rotary tank 35. The measuring system or device 30 consists of a cylinder 36 painted with the aforementioned paint. The cylinder 36 has a diameter of 200 mm and a height of 200 mm. The cylinder 36 has been connected to a fixed support by a torque meter or sensor 32 (dual range: $0 \div 1$ and $0 \div 10$ Nm, and precision 0.1 % F.S.). In the example, the test cylinder 36 is connected to a linear actuator 39 by means of the sensor 32. For the tests, the cylinder 36 has been submerged in a cylindrical container 35 filled with water 38 and concentric in relation to the test cylinder 36. The distance between the painted cylinder 36 and the internal wall of the container 35 is 5 mm. The container 35 is fixed to a turn plate 37 actuated by a motor 31, shifted 180° by means of a transmission belt (toothed belt) 33. Therefore, the tank 35 rotates thanks to the rotation of the rotary base or turn plate 37, as both move jointly. Ball bearings 34 can also be observed. The rotary tank 35 is fitted with a temperature sensor (not illustrated). A linear actuator 39 serves to facilitate assembly and dismantling of the device.

As a person skilled in the art is aware, the Reynolds number can be obtained through the following equation

$$Re = \frac{\rho \Omega a (b - a)}{\mu}$$

wherein

$\rho$ = fluid density (in this case 1025 kg/m3)
$\Omega$ = speed of rotation (in this case $100 \div 1500$ rpm)
a = test cylinder radius (in this case, 0.1 m)
b = internal radius of the cylindrical container (in this case 0.105 m)
$\mu$ = fluid viscosity (in this case 0.001 Pa*s)

In this example, given the system's dimensions and the speed of 1500 rpm, the result is

$$Re = \frac{1025 \cdot 1500 \cdot \pi \cdot 2 \cdot 0{,}1 \cdot 0{,}005}{60 \cdot 0{,}001} = 80503 > 64$$

This indicates that a laminar regime would be obtained by a difference (b-a) of only 6 in the lowest order of magnitude.

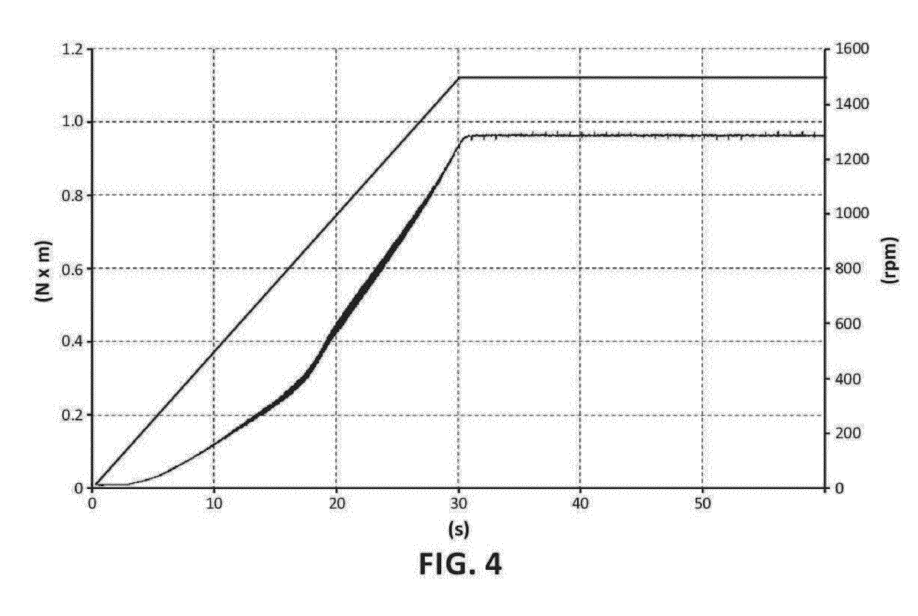

The drag force torque is measured at the required speed. A control system of the motor 31 makes it possible to regulate the acceleration in order to reach the working speed in the required time. Figure 4 shows a graph with the measurement of the friction torque (N x m) recorded by the measuring device of the example, based on time (s). It also shows the speed reached by the actuator over time (rpm). The accuracy of the measurement can be appreciated once the speed set point has been reached (1500 rpm). For a regime value of the drag torque and an outer radius of the test cylinder of 100 mm, the resulting drag force is: F = T/r = 9.7 N.

Different tests were also carried out using several different test cylinders. Short tests were performed (lasting approximately 60 seconds) at different speeds of rotation. The temperature of the water before and after each test was also recorded. The water was analysed after the tests at different speeds.

Among other applications of the device of the invention, one would note measuring the drag force between liquids and surfaces and measuring the drag force of liquids with paints (for example for boats).

Among the many advantages that a person skilled in the art may appreciate, the fact that the accuracy of the measurement is not affected by the system's geometry and by the actuation system is worthy of note: the dynamic effects of the rotary tank do not affect the measurement; the noise of the motor does not affect the measurement; the torque/force meter does not measure anything other than the force generated on the surfaces of the static element.

Throughout this text, the word "comprises" and its variants (such as "comprising", etc.,) should not be interpreted as excluding, in other words, they do not exclude the possibility of what is described including other elements, steps, etc.

At the same time, the invention is not limited to the specific embodiments that have been described and also encompasses, for example, variants that may be embodied by the average person skilled in the art (for example, with regard to the choice of materials, dimensions, components, configuration, etc.), within the scope of what may be inferred from the claims.

**Claims**

1. A measuring device (20, 30, 50) of the relative drag force between a liquid (28, 38, 58) and a surface, which comprises an inner element (26, 36, 56), a sensor (22, 32, 52), a tank (25, 35, 55) and an actuator (21, 31, 55), wherein said tank (25, 35, 55) is configured to receive therein said inner element (26, 36, 56) and to be filled in at least part of the volume not occupied by said inner element (26, 36, 56) with a liquid (28, 38, 58) whose drag force relative to a surface is required to be measured,
   the measuring device (20, 30, 50) being **characterised in that** either the sensor (22, 32) is connected to a surface of said inner element (26, 36) and the actuator (21, 31) is connected to said tank (25, 35), or the sensor (52) is connected to a surface of said tank (55) and the actuator (51) is connected to said inner element (56), the measuring device (20, 30, 50) being configured so that the element (25, 35, 56) which is connected to the actuator (21, 31, 51) rotates actuated by said actuator (21, 31, 51) at the same time as the other element (26, 36, 55) remains static, said sensor (22, 32, 52) being configured to measure the drag force experienced on the surface of the element (26, 36, 55) to which it is connected, which is in contact with the liquid (28, 38, 58) in motion, as a consequence of the movement sustained by the liquid (28, 38, 58) which in turn is a consequence of the rotation applied by the actuator (21, 31, 51).

2. The device (20, 30) of claim 1, wherein the sensor (22, 32) is connected to a surface of the inner element (26, 36) and the actuator (21, 31) is connected to the tank (25, 35), the tank (25, 35) being the element that is configured to rotate actuated by said actuator (21, 31) while the inner element (26, 36) remains static.

3. The device (50) of claim 1, wherein the sensor (52) is connected to the tank (55) and the actuator (51) is connected to the inner element (56), the inner element (56) being the element that is configured to rotate actuated by said actuator (51) while the tank (55) remains static.

4. The device (50) of claim 3, wherein the sensor (52) is connected to an outer surface of the tank (55).

5. The device (20, 30, 50) of any of the preceding claims, wherein said tank (25, 35, 55) or said inner element (26, 36, 56) is fitted with a temperature sensor.

6. The device (20, 30, 50) of any of the preceding claims, wherein said tank (25, 35, 55) is cylindrical.

7. The device (20, 30, 50) of any of the preceding claims, wherein said inner element (26, 36, 56) is cylindrical.

8. The device (20, 30, 50) of any of the preceding claims, wherein the element (26, 36, 55) that is connected to the sensor (22, 32, 52) is coated or lined by a coating or lining, or has a surface treatment applied, the device being configured to measure the drag force exerted by the liquid on said coating, lining or treatment.

9. The device (20, 30, 50) of claim 8, wherein said coating, lining or treatment is a layer of paint.

10. The device (20, 30, 50) of claim 8, wherein said coating, lining or treatment is a fabric.

11. The device (20, 30, 50) of the preceding claims, wherein the surface of the element (25, 35, 56) that is connected to the actuator (21, 31, 51), which is in contact with the liquid (8, 38, 58), comprises a plurality of mixing elements to favour turbulence, mixing or stirring of the liquid.

12. The device (20, 30, 50) of any of the preceding claims, configured so that in use, the regime of the liquid inside the tank (25, 35, 55) is laminar flow or turbulent flow.

13. A method for measuring the relative drag force between a liquid (28, 38, 58) and a surface **characterised by** the stages of:

- introducing an inner element (26, 36, 56) inside a tank (25, 35, 55), wherein either a surface of said inner element (26, 36) is connected to a sensor (22, 32) and the tank (25, 35) is connected to an actuator (21, 31), or a surface of said tank (55) is connected to a sensor (52) and the inner element (56) is connected to an actuator (51);
- filling the volume of said tank (25, 35, 55) not occupied by said inner element (26, 36, 56) with a liquid (28, 38, 58) whose drag force is required to be measured;
- actuating said actuator (21, 31, 51), making the element (25, 35, 56) that is connected to the actuator (21, 31, 51) rotate, while the other element (26, 36, 55) remains static;
- measuring through said sensor (22, 32, 52) the relative drag force between the liquid (28, 38, 58) and the surface of the element (26, 36, 55) to which the sensor (22, 32, 52) which is in contact with said liquid is connected, a force that occurs as a consequence of the movement sustained by the liquid (28, 38, 58) which in turn is a consequence of the rotation applied by the actuator (21, 31, 51).

**FIG. 1**
(STATE OF THE ART)

**FIG. 2**

FIG. 3

FIG. 4

EP 2 910 923 A1

**FIG. 5**

Europäisches
Patentamt

European
Patent Office

Office européen
des brevets

# EUROPEAN SEARCH REPORT

**Application Number**

EP 14 38 2060

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 240 286 A (BENTZ ALLAN J [US]) 23 December 1980 (1980-12-23) | 1-10,13 | INV. G01N11/14 |
| Y | * abstract * * figures 1-3 * * columns 1,3 * | 11,12 | |
| X | US 3 935 726 A (HEINZ WERNER) 3 February 1976 (1976-02-03) * abstract * * figure 1 * * columns 2-4 * | 1,3,4, 8-10,13 | |
| Y | DE 195 02 682 A1 (RUCK HEINZ PROF DR [DE]) 21 September 1995 (1995-09-21) * abstract * * figure 3 * * column 3, line 52 - column 4, line 13 * | 11,12 | |
| X | EP 0 215 277 A1 (CONTRAVES AG [CH]) 25 March 1987 (1987-03-25) * abstract * * figure 1 * * pages 1-4 * | 1,3,4, 8-10,13 | |

**TECHNICAL FIELDS SEARCHED (IPC)**

G01N

The present search report has been drawn up for all claims

| Place of search | Date of completion of the search | Examiner |
|---|---|---|
| The Hague | 31 July 2014 | Seifter, Achim |

CATEGORY OF CITED DOCUMENTS

X : particularly relevant if taken alone
Y : particularly relevant if combined with another
　document of the same category
A : technological background
O : non-written disclosure
P : intermediate document

T : theory or principle underlying the invention
E : earlier patent document, but published on, or
　after the filing date
D : document cited in the application
L : document cited for other reasons

& : member of the same patent family, corresponding
　document

EPO FORM 1503 03.82 (P04C01)

**ANNEX TO THE EUROPEAN SEARCH REPORT
ON EUROPEAN PATENT APPLICATION NO.**                    EP 14 38 2060

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2014

| Patent document cited in search report | | Publication date | Patent family member(s) | | Publication date |
|---|---|---|---|---|---|
| US 4240286 | A | 23-12-1980 | NONE | | |
| US 3935726 | A | 03-02-1976 | DE | 2330964 A1 | 16-01-1975 |
|  |  |  | US | 3935726 A | 03-02-1976 |
| DE 19502682 | A1 | 21-09-1995 | DE | 9404284 U1 | 04-08-1994 |
|  |  |  | DE | 19502682 A1 | 21-09-1995 |
| EP 0215277 | A1 | 25-03-1987 | DE | 3671520 D1 | 28-06-1990 |
|  |  |  | EP | 0215277 A1 | 25-03-1987 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TOHIRO OTSUKI et al.** *Development of drag reducing antifouling paint and experimental investigation on mass transfer phenomenon near the painted wall*
- **S.Z. KIIL et al.** *Marine biofouling protection: design of controlled release antofouling paints*
- **CLAUS E WEINELL ; KENNETH N OLSEN ; MARTIN W CHRISTOFFERSEN ; SOREN KIIL.** *Experimental Study of Drag Resistance Using a Laboratory Scale Rotary Setup,* 2003, vol. 19, 1, , 45-51